# EUROPÄISCHE PATENTSCHRIFT

(11) **EP 1 197 691 B1**
(45) Veröffentlichungstag und Bekanntmachung des Hinweises auf die Patenterteilung: **14.09.2005**
(21) Anmeldenummer: 01890294.0
(22) Anmeldetag: 15.10.2001
(51) Int. Cl.: F16K 1/38, F16K 1/46

(54) **Ventil, insbesondere Befüllventil**
Fill valve
Soupape de remplissage

(30) Priorität: 16.10.2000 AT 17672000
(43) Veröffentlichungstag der Anmeldung: 17.04.2002
(73) Patentinhaber: Ventrex Automotive GmbH, 8010 Graz (AT)
(72) Erfinder: Patsch, Andreas, Dipl.-Ing., 8042 Graz (AT)
(74) Vertreter: Wildhack, Helmut

(56) Entgegenhaltungen:
- EP-A- 0 554 752
- US-A- 2 995 057

## Beschreibung

Die vorliegende Erfindung betrifft ein neues Ventil, insbesondere ein Befüllventil, für die Hochdruck-Technik, bzw. für Druckbehälter von mit einem fluorkohlenwasserstoff-freien, leicht verflüssigbaren Kältemittel, wie CO₂, betreibbaren Kältemaschinen, insbesondere für Klimaanlagen von Fahrzeugen u. dgl., mit einer zwischen den kegeligen Dichtflächen eines Ventilgehäuses bzw. -sitzes und eines federbelasteten Ventilkegels, insbesondere Ventiltellers, angeordneten und dort wirksamen Dichtung, welche als - in einer in die Dichtfläche des Ventilsitzes des Ventilkörpers eingetieften Ringnut angeordnetes Dichtungs-Toroid aus einem Elastomer-Material ausgebildet ist.

Heute werden Klimaanlagen in Kraftfahrzeugen immer noch mit dem Kältemittel mit der Bezeichnung R134a, einem Kältemittel auf Basis von Fluorkohlenwasserstoffen, betrieben. Ein wesentlicher Nachteil dieser Kältemittel ist, dass sie, wie von den Kühlschränken bekannt, den Treibhauseffekt zu wesentlichen Teilen fördern. In Zukunft ist es daher gefordert, auch die Klimaanlagen von Kraftfahrzeugen mit weniger umweltschädlichen Kältemitteln zu betreiben, wobei dazu auszuführen ist, dass momentan große Anstrengungen unternommen werden, solche Klimaanlagen mit Kohlendioxid, also CO₂, oder mit Kohlenwasserstoffen als Kältemittel für den Serieneinsatz zu entwickeln.

An die Gasventile von mit Kältemittelgasen, insbesondere CO₂, unter hohen Drucken im Bereich von zumindest 50 bis zu 180 oder 200 bar befüllten Behältern, sind bezüglich Dichtigkeit und Zuverlässigkeit hohe Anforderungen gestellt. Zusätzlich zu den hohen Drucken sollen auch Betriebstemperaturen von oft weit über 100°C zu keinen wesentlichen Verschlechterungen der Qualität der Dichtungen führen.

So sind z.B. in den meisten mitteleuropäischen Ländern folgende Randbedingungen zu erfüllen: Leckage: weniger als 1 g CO₂ pro Jahr; physikalische und chemische Beständigkeit gegen CO₂ im Temperaturbereich von -40°C bis +180°C; Beständigkeit gegen Drücke bis zumindest 180 bar; Beständigkeit gegen explosionsartige Dekompression.

Es sind also für das Ventil und insbesondere für dessen Dichtungselement, z. B. bei CO₂ als Füllgas, die sogenannten "überkritischen Bedingungen" über lange Zeiträume hinweg auszuhalten. Dazu ist erläuternd anzumerken, dass beispielsweise CO₂ im überkritischen Zustand ein ausgezeichnetes Lösungsmittel für eine große Zahl organischer Stoffe darstellt und daher als Extraktionsmittel, z.B. in der Lebensmitteltechnologie, breite Anwendung findet.

Diese Tendenz zum Auflösen oder Anlösen von organischen Substanzen macht auch vor sogenannten lösungsmittelfesten, inerten Hochpolymeren nicht halt, und es ist daher selbst bei solchen Polymeren ein gewisser Grad an Quellung nicht zu vermeiden, welches Phänomen infolge eines Auseinanderdrängens der Molekülketten die Materialstruktur mechanisch schwächt, sodass den hohen Drücken des Kohlendioxids eine geringere Widerstandskraft entgegengesetzt wird als im ungequollenen Zustand. Es sind nur wenige Polymere verfügbar, welche den bei den o.a. hohen Kohlendioxid- oder Kohlenwasserstoff-Drücken standhalten und den an sie gestellten sonstigen Anforderungen, wie insbesondere die oben schon genannte Leckage auf unter 1 g CO₂ pro Jahr zu halten, gerecht werden können.

Aus der US 2 995 057 A ist eine ringförmige Dichtung für Hochdruck-Ventile mit konischem Ventilsitz bekannt geworden, deren Querschnitts-Kontur auf der dicht-wirksamen Seite der Ventilsitz- bzw. Ventilkörper-Dichtfläche einen über die kegelstumpfartige Ventil(sitz)fläche hinausragenden Vorsprungs-Bereich, einen sich in Richtung zum Hochdruck hin anschließenden, unter die jeweilige Dichtfläche zurückspringenden Rücksprung-Bereich und einen von dort zur genannten Dichtfläche zurückkehrenden Auslaufbereich aufweist. Diese bekannte Dichtung sitzt in einer im wesentlichen die Querschnittsform eines rechtwinkeligen Dreiecks aufweisenden Ringnut des Ventils bzw. Ventilsitzes, wobei die in den Ventilkörper bzw. Ventilsitz eingetiefte Nut im wesentlichen durch die Dreiecks-Katheten gebildet sind, deren eine parallel zur Ventilachse und deren andere senkrecht zu derselben angeordnet sind.

Gemäß dieser US-A ist weiters vorgesehen, dass die Kontur des Dichtungs-Ringes auf der dicht-wirksamen Seite so gestaltet ist, dass sie mit einem mit der kegelstumpfförmigen Dichtfläche des Ventils bzw. Ventilsitzes konform verlaufenden und dieselbe jeweils ohne Knicke od. dgl. fortsetzenden, geraden Ansatz- und einem ebensolchen Auslauf-Abschnitt, einem sich an den Ansatz-Abschnitt winkelig anschließenden, mit seinen beiden Katheten die kegelige Dichtfläche überragenden rechtwinkelig dreieckigen Vorsprungs-Abschnitt und einem derartig wieder mit zwei Katheten eines rechtwinkeligen Dreiecks gebildeten Rücksprungs-Abschnitt ausgebildet ist. Die genannten Katheten von Vorsprungs- und Rücksprungs-Abschnitt sind - wie die Flanken der Ringsitznut - jeweils parallel bzw. senkrecht zur Ventilachse ausgerichtet.

Die rechtwinkeligen Übergänge der genannten Katheten ineinander sowie die Übergänge von denselben zur Ansatz- und zur Auslaufgeraden sind jeweils durch eine Abrundung mit geringem Radius gebildet.

Es hat sich gezeigt, dass die bisher bekannte und in der o.a. US-A konkret beschriebene und für weniger anspruchsvolle Dichtungsaufgaben durchaus geeignete Ventil-Ringdichtung unter extremen Bedingungen, wie oftmalige Ventilbetätigung und hohe Druckwechsel-Beanspruchung und insbesondere bei Dichtungsaufgaben, welche im Falle von unter hohen Drucken stehenden Fluid-Medien, zu einem Anquellen des Dichtring-Materials neigen, nicht ausreichend stabil sind.

Im Rahmen eingehender theoretischer Analysen sowie praktischer Versuche wurde gefunden, dass die bisher bekannte Art der Formgebung des Querschnittsprofils für Hochdruck-Ventil-Dichtungsringe, insbesondere für solche für Kegel-Ventile, beispielsweise im Hinblick auf die Gefahr eines Materialbruches, von asymmetrischen Verquetschungen, und unter Umständen, insbesondere, wenn Material-Quellung eintritt, auch eines Auswanderns der Dichtung od.dgl. Fehlfunktionen nicht optimal ist.

Die Erfindung hat sich die Aufgabe gestellt, eine Ring-Dichtung für Ventile, wie insbesondere für Kegel-Ventile, für Hochdruckbelastung zu schaffen, bei welcher diese Gefahren gebannt sind und welche höchsten Belastungen auch unter den erschwerenden Bedingungen der unvermeidlichen Material-Quellung und damit Materialstruktur-Schwächung standhalten.

Es sollte - bei einer adäquaten Gestaltung der Grundstruktur des Ventils selbst - durch geeignete Anordnung des Dichtungs-Ringes innerhalb der Ventil-Struktur und durch optimales Design und insbesondere durch optimale Querschnitts-Formgebung desselben das vorgegebene Ziel einer Leckage von praktisch Null bzw. einer wie oben angegebenen, äußerst geringen Leckage erreicht werden. Außerdem sollte die Befüllung der Druckgas-Behälter durch Einsatz eines selbstschließenden Befüllventils kostengünstig erfolgen können.

Unter Einsatz moderner mathematischer Methoden, wie z.B. der Methode der finiten Elemente, und ausgehend von grundsätzlichen Überlegungen bezüglich einer den realen Materialeigenschaften optimierend angepassten Querschnitts-Grundform konnte zu einer Querschnitts-Gestalt für einen Ventil-Dichtring gelangt werden, welcher bevorzugt für ein kleindimensioniertes, nach Art eines Kegel- bzw. Tellerventils gebautes Füllventil geeignet ist. In das Kalkül zur Gestaltung des Dichtring-Profilquerschnittes wurde die Volumspressung des den Dichtring bildenden Polymermaterials, die unter Druckeinwirkung stattfindenden Material- und Volumstransfers und die Aufquellung des Dichtring-Materials durch das auf dasselbe einwirkende Kältemittel mit einbezogen.

Nur zur Illustration der in Rede stehenden Größenordnungen der Dimensionierung von derartigen Füllventilen für mit CO₂ betriebenen Klimaanlagen ist zu bemerken, dass z.B. die Gesamtlänge des Ventilgehäuses bloß etwa um die 20 mm und dessen Außenradius etwa um die 8 mm betragen kann. Der den Ventilteller an seinem unteren Ende tragende, von einer Feder umgebene Ventilschaft weist beispielsweise einen Durchmesser im Bereich von etwa 2 mm auf und der Ventilkegel weist an seiner breitesten Stelle einen Durchmesser von etwa 5,5 mm auf. Ein die Querschnitts- bzw. Profilfläche des für ein solch kleines Füllventil vorgesehenen Dichtungsringes umschreibendes Quadrat hat beispielsweise eine Seitenlänge von max. 1,5 mm.

Es wurde gefunden, dass eine - wie aus der in Rede stehenden US-A hervorgehende - Gleichläufigkeit der Querschnitts-Kontur eines Dichtrings mit der Ventilsitz-Kegelfläche bzw. mit deren Erzeugenden dort, wo die Dichtung aus der Ringnut zur Ventilsitz-Kegelfläche gelangt, also dort, wo sie sozusagen beginnt und dort, wo sie endet, ungünstig ist, sondern, dass es wesentlich ist, dass zumindest auf der Seite des niedrigeren Drucks und dort, wo Zugspannungen beim letztendlichen Schließen des Ventils und bei der dabei stattfindenden Press-Verformung auftreten, ein "sofortiges" Überragen der Dichtring-Querschnitts-Kontur über die Ventilsitz-Kegelfläche wesentliche Verbesserungen bringt.

Gegenstand der vorliegenden Erfindung ist ein Ventil, insbesondere ein Befüllventil, der eingangs genannten Art, dessen wesentliche Merkmale darin bestehen,
- dass der der Ventilachse zugekehrte Innenbereich des Dichtungs-Toroids im wesentlichen eine - der Kontur der Vorderseite des Großbuchstabens "R" entsprechende Querschnitts-Gestalt bzw. -Kontur mit einer oberen, gleich vom Rand der Ringnut zur Ventilsitz-Dichtfläche hin über die durch die Ventilsitz-Dichtfläche definierte Kegelfläche in Richtung der Ventilachse hinaus ragenden - dem oberen Bogen des Buchstaben "R" entsprechenden - Ausbuchtung bzw. Aufwölbung mit einem ventilachsen-nahen Maximum und einer an diese R-Ausbuchtung anschließenden, von der Ventilachse weg, sich unter die soeben definierte Kegelfläche der Ventilsitz-Dichtfläche zurückziehenden R-Einbuchtung mit einem ventilachsen-fernen Minimum aufweist, von welcher sich der Balken des Buchstaben "R" wieder zur Ventilsitz-Dichtfläche bzw. zur dieselbe definierenden Kegelfläche hin schräg erstreckt, wobei die genannte Ausbuchtung die Einbuchtung und der R-Balken "schleifend "ineinander übergehen.

Das neue Ventil kann in der Industrie, Luft- und Raumfahr-Technik und für diverse Anwendungen im Hochdruckbereich eingesetzt werden.

Besonders bevorzugt ist eine Ausführungsform des neuen Ventils mit den eingangs genannten Merkmalen gemäß **Anspruch** 2, welches dadurch gekennzeichnet ist,
- dass die Querschnitts-Kontur des Innenbereiches des Dichtungs-Toroids vom (oberen) Beginn der - unmittelbar vom Rand der Ringnut zur Ventilsitz-Kegelfläche hin beginnend - die Ventilsitz-Kegelfläche überschreitenden R-Bogen-Ausbuchtung über die sich danach unter die genannte Kegelfläche zurückziehende Einbuchtung hinweg bis zum (unteren) Fuß-Ende des R-Balkens hin durchgehend einen stetigen Kurvenverlauf ohne Kanten, Knicke, Unstetigkeitsstellen od.dgl. mit im wesentlichen vier - nach Art von gekrümmten Kurven und tangential in diese einbindenden Geraden - ineinander übergehenden Kontur-Zonen (I, II, III, IV) aufweist, wobei
- die Zone (I) als den R-Bogenansatz bildende, unmittelbar vom oberen Nut-Rand weg über die Ventilsitz-Kegelfläche hinaus sich erhebende R-Bogenansatz-Gerade mit einem Neigungswinkel zu einer zur Ventilachse senkrechten Ebene verläuft, welcher größer ist als der Neigungswinkel der Erzeugenden der Ventilsitz-Kegelfläche zur genannten Ebene,
- die Zone (II) durch einen sich tangential an die Zone (I) anschließenden, über ein, der Ventilachse nahes Maximum hinweg bis etwa zur Ventilsitz-Kegelfläche zurück verlaufenden, die R-Bogen-Ausbuchtung bildenden R-Ausbuchtungs-Kreisbogen, und
- die Zone (III) durch einen von der Zone (II) her kontinuierlich und stetig - etwa "S"-artig - übergehenden, die R-Einbuchtung bildenden, über ein - von der Ventilachse entferntes - Minimum hinweg sich ziehenden R-Einbuchtungs-Kreisbogen gebildet sind, und dass schließlich
- die Zone (IV) als aus dem R-Einbuchtungs-Kreisbogen der Zone III tangential auslaufende mit einem Neigungswinkel zur ventilachsen-senkrechten Ebene, der ebenfalls größer ist als der Neigungswinkel der Erzeugenden der Ventilsitz-Kegelfläche, wieder bis zur eben genannten Ventilsitz-Kegelfläche hin bis zum unteren Nut-Rand sich wegerstreckende, den R-Balken bildende, schräge R-Balken-Gerade ausgebildet ist.

Eingehende Versuche mit dem neuen Dichtungs-Toroid haben gezeigt, dass durch die erfindungsgemäß vorgesehene spezielle Querschnitts-Formgebung sowohl in dessen in die Ringnut des Ventilsitzes eingebrachten Außen-Bereich als auch insbesondere in dessen zur Ventilachse hin radial nach innen gerichtetem Innen-Bereich in der spezifischen Form des Großbuchstabens "R" eine optimale Massen- bzw. Volumsverschiebung und eine gezielte günstige Press- und Quetschverformung des Ringes beim endgültigen Schließen des Ventils erreicht wird, und dass trotz der oben beschriebenen, schwierig zu beherrschenden Quellung und dadurch bedingt, erhöhten Gas-Permeation die Leckage noch wesentlich weiter unter den oben angeführten zulässigen Grenzwert gesenkt werden kann, als bisher.

Der **Anspruch** 3 offenbart im Sinne der Erfindung besonders günstige Querschnitts-Kontur-Parameter und deren Maß- bzw. Dimensionierungs-Relationen untereinander.

Eine besonders gute Dichtwirkung des neuen Befüllventils lässt sich erzielen, wenn, wie gemäß **Anspruch** 4 vorgesehen ist, dass das die - durch die Dichtfläche des Ventil-Sitzes definierte - Kegelfläche überragende gesamte Volumen der R-Bogen-Ausbuchtung des Dichtungs-Toroids im nicht druckbelasteten Zustand im wesentlichen gleich ist mit dem oder gar größer ist als das gesamte Volumen der sich unter die, wie eben definierte Kegelfläche zurückziehenden R-Einbuchtung.

Es hat sich also gezeigt, dass es innerhalb der neuen Toroid-Querschnittsform günstig ist, wenn ein relativ weit über die o.a. Ventilsitz-Kegelfläche ragender Bereich von deren Polymermaterial vorgesehen ist, welcher beim Schließen des Ventils, wenn der Gasdruck den Ventilkegel gegen die Kraft der ihn haltenden Feder an den Ventilsitz presst, einerseits relativ stark zusammengepresst wird, was z.B. der Tendenz zur Quellung und damit einer dadurch bedingten Tendenz zur Leckage zuwider läuft und anderseits gleichzeitig das "überstehende" Polymermaterial durch die Pressverformung in den durch die oben beschriebene R-Einbuchtung gegebenen Ausweichraum eindringen kann.

Als durchaus vorteilhaft und wichtig für eine hohe mechanische Widerstandskraft und Stabilität gegen die Verformungskräfte beim Zusammenpressen des Dichtungs-Toroids bei unter Druck geschlossenem Ventil hat sich eine hoch-scherfeste Verbindung der Ring-Außenseite mit der Wandung der Ringnut des Ventilsitzes erwiesen. Demgemäß sieht der **Anspruch** 5 vor, dass die nach außen weisende, bevorzugt durch Vulkanisation, an den entsprechend geformten Grund der Ringnut des Ventil-Sitzes materialschlüssig gebundene Peripherie- bzw. Außenfläche des Dichtungs-Toroids konvex radial nach außen gekrümmt ist.

Alternativ bzw. zusätzlich kann vorgesehen sein, dass die untere bzw. Basisfläche des im wesentlichen R-artige Querschnitts-Gestalt aufweisenden Dichtungs-Toroids und die entsprechende, mit dem Toroid, bevorzugterweise ebenso durch Vulkanisation, materialschlüssig verbundene Ringnut-Wandfläche als sich parallel zur Ventilachse erstreckende Zylinderflächen ausgebildet sind.

Um ein eventuelles Ablösen von Randbereichen der Außenregion des in die Ringnut des Ventilsitzes bevorzugterweise einvulkanisierten Dichtung-Toroids von der Nut-Wandung, insbesondere am oberen Übergang bzw. Rand von der Ventilsitz-Kegelfläche in die Ring-Nut bei der Materialpressung als Folge des Schließens des Ventils zu vermeiden, hat es sich als vorteilhaft erwiesen, gemäß **Anspruch** 6 vorzugehen und dafür zu sorgen, dass die der nach außen gekrümmten Konvex-Fläche des Ring-Toroids entsprechend gekrümmte Konkav-Fläche des Grunds der Ringnut des Ventil-Sitzes oberseitig ohne Radialflächen-Bereich direkt an der kegeligen Dichtfläche des Ventil-Sitzes endet.

Um eine Art gleitend ausweichende Verformung des Dichtungs-Toroids bei Annäherung des Ventiltellers an den Ventilsitz beim Schließen des neuen Ventils unter Druckeinwirkung zu erreichen, und damit eine Überforderung des Materials zu vermeiden, ist es günstig, wenn - alternativ oder zusätzlich - die in die Ausbuchtung des R-Bogens des Ring-Toroid-Querschnitts übergehende, obere Tangentialfläche und die aus der Einbuchtung unterhalb der R-Bogen-Ausbuchtung auslaufende, dem schrägen R-Balken entsprechende Fläche in, gegebenenfalls untereinander gleichen Winkeln von mehr als 55°, insbesondere von 70 bis 85°, zu einer zur Ventil-Achse senkrechten Ebene geneigt sind.

Einer weiteren Verbesserung der Dichtwirkung bei hohen Kältemittel-Drücken kann eine Ausbildungsform der Erfindung nach **Anspruch 7** dienlich sein, gemäß welcher vorgesehen ist, dass die Kegelstumpf-Dichtflächen von Ventil-Sitz und Ventil-Kegel in einem Neigungswinkel von 40 bis 50°, bevorzugt in einem Neigungswinkel von 45°, zur ventilachsen-senkrechten Ebene geneigt ausgebildet sind.

Um die Gas-Permeation und damit die Leckage bei geschlossenem Ventil zu minimieren, kann alternativ oder zusätzlich eine "mittige" Anordnung des Dichtung-Toroids in der Ventilsitz-Kegelfläche besonders vorteilhaft sein. Gemäß dieser Variante ist es vorgesehen, dass die Mittel-Ebenen der Ventilsitz-Ringnut und des in dieselbe einvulkanisierten Dichtungs-Toroids mit einer in der halben Höhe eines durch die Dichtfläche des Ventil-Sitzes definierten Kegelstumpfes eingezogenen, zur Ventilachse parallelen zylindrischen Mittel-Fläche des Ventilkegels in dessen Stellung bei geschlossenem Ventil übereinstimmen.

In praktisch die gleiche Richtung weist eine weitere alternativ oder zusätzlich vorgesehene, vorteilhafte Ausführungsform, gemäß welcher jedes der beidseitig des Dichtungs-Toroids bzw. der dasselbe beherbergenden Ringnut sich erstreckenden Kegelstumpf-Bänder der Dichtfläche des Ventilsitzes eine untereinander gleiche Erzeugenden-Breite aufweist, welche geringer ist, als die Erzeugenden-Breite des Dichtungs-Toroids.

Optimale Ergebnisse lassen sich, wie gefunden wurde, dann erreichen, wenn die aus dem **Anspruch** 8 hervorgehenden Maßverhältnisse der Krümmungs- bzw. Kreisbogen-Radien der die Querschnittsfläche des Dichtungs-Toroids mit der R-artigen Querschnitts-Gestalt begrenzenden Konturen zueinander eingehalten werden.

Hiebei ist zu betonen, dass sich diese Maßverhältnisse, wie schon oben erläutert, im Rahmen einer Größenordnung im Bereich von etwa 1 bis maximal 5 mm abspielen.

Im Sinne der soeben angesprochenen Optimierung hat es sich - siehe dazu **Anspruch** 9 - insbesondere ergänzend zu den im Anspruch 8 angegebenen Dimensionierungs-Zahlen, als günstig erwiesen, wenn die auf den Mittelpunkt der Kreis-Krümmung der Konvex-Außenfläche des Dichtungs-Toroids als Bezugspunkt (x = 0, y = 0) bezogenen Verhältnisse der Koordinaten x und y, untereinander die dort im Detail genannten sind.

Der **Anspruch** 10 gibt die - weiter oben schon kurz angedeuteten - besonders bevorzugten Bedingungen der Art und Weise der Verformung des neuen Dichtungs-Toroids beim Schließen des erfindungsgemäßen Ventils unter dem Druck des CO₂-Gases an: Sie bestehen im wesentlichen darin, dass bei unter dem Druck des Kältemittels, insbesondere CO₂, stehendem, geschlossenem Ventil, die R-Ausbuchtung des Dichtungs-Toroid-Innenbereiches bzw. dessen durch die Druck-Einwirkung verringertes Volumen, mittels der kegeligen Dichtfläche des Ventiltellers im wesentlichen in Richtung von der Ventilachse weg zum R-Schrägbalken hin zum und in den durch die gesamte R-Einbuchtung gegebenen Freiraum press-verformend verschieb- bzw. verdrängbar ist.

Bei einer gemäß diesem Anspruch vorgesehenen alternativen oder zusätzlichen Ausführungsvariante betreffend die Auslegung der Größe und Gestaltung der Querschnitts-Fläche bzw. -Kontur des neuen Dichtungs-Toroids kann in hohem Maß dafür gesorgt werden, dass bei unter Druck-Einwirkung geschlossenem Ventil mit aneinandergepressten Dichtflächen von Ventil-Sitz und Ventil-Teller das die - durch die Dichtfläche des Ventil-Sitzes definierte - Kegelfläche überragende Volumen der R-Bogen-Ausbuchtung des Dichtungs-Toroids in den durch die sich unter die wie eben definierte Kegelfläche zurückziehende Einbuchtung gebildeten Freiraum verdrängbar ist, wobei ein gewisser Rest-Freiraum bestehen bleibt.

In dem Restraum herrscht schließlich ein zwischen dem Außen- bzw. Atmosphärendruck und dem Behälter-Innendruck liegender Druck. Insgesamt bildet der unter diesem mittleren Druck stehende Freiraum mit den zwischen dem Ventilteller und dem Ventilsitz eingequetschten Toroid und mit den an sich schon äußerst geringen Gasaustausch zulassenden, beidseitig des Toroids angeordneten kegelförmigen Dichtflächen von Ventilsitz und Ventilteller ein die Gas-Permeation durch enge lange Wege und dazwischen liegende Erweiterungs-Räume wesentlich reduzierendes Dichtungs-Labyrinth.

Im Rahmen der Erfindung besonders bevorzugt ist es, wenn - siehe dazu **Anspruch** 11 - das Ring-Toroid aus einem Elastomer-Dichtungs-Werkstoff auf Basis eines Fluor-Polymers, vorzugsweise aus einem Handelsprodukt mit der Bezeichnung SIMRIT®, insbesondere des Typs 85 FPM (nach DIN), mit den dort genannten Eigenschaftswerten gefertigt ist.

Was die für die Erreichung einer möglichst effektiven Metall-auf-Metall-Dichtung der Kegelflächen von Ventilsitz und Ventilteller und weiters einer hochsicheren Einvulkanisation des Dichtungs-Toroids in die Ring-Nut des Ventilsitzes vorteilhafte Materialien betrifft, kann alternativ oder zusätzlich eine Ausbildungsform vorgesehen sein, gemäß welcher der Ventilkörper bzw. zumindest der Ventilsitz mit der Ringnut aus einem einer Auf-Vulkanisation von Elastomeren zugänglichen Metall bzw. aus einer derartigen Metall-Legierung, bevorzugt Bronze, Messing oder Aluminium, gebildet ist.

Ebenfalls in die Richtung einer Erhöhung der Dichtwirkung und somit einer Verminderung der Langzeit-Leckagewerte kann eine weitere alternative oder zusätzliche Ausführungsvariante im Rahmen des Anspruches 11 zum Tragen kommen, gemäß welcher die Kegelstumpf-Dichtflächen von Ventil-Sitz und Ventil-Teller eine zumindest eine metallische Grobabdichtung gewährleistende Oberflächen-Bearbeitungs-Qualität, bevorzugt eine Rauheit von maximal R_{z}4, aufweisen.

Anhand der Zeichnung wird die Erfindung näher erläutert:

Es zeigen die Fig. 1 eine Teil-Schnittansicht eines erfindungsgemäßen Ventils im in die Wandung des Druckbehälters für die Aufnahme des Kältemittels, insbesondere Kohlendioxid, integrierten Ventils gemäß der Erfindung, die Fig. 2 ebenfalls eine Teil-Schnittansicht des eigentlichen Ventilkörpers bzw. -Gehäuses, Fig. 3 eine detaillierte Ansicht eines Schnittes durch den Ventilsitz, durch das darin angeordnete Dichtungs-Toroid sowie durch den Ventilteller, die Fig. 4 ebenfalls eine Schnittansicht des Ventilsitzes mit dem Dichtungs-Toroid, wobei dort Angaben bezüglich der Maßverhältnisse und der Koordinaten der Mittelpunkte der Krümmungen angegeben sind, und die Fig. 5 die Schnittansicht des Dichtungs-Toroids bei unter Druck geschlossenem Ventil.

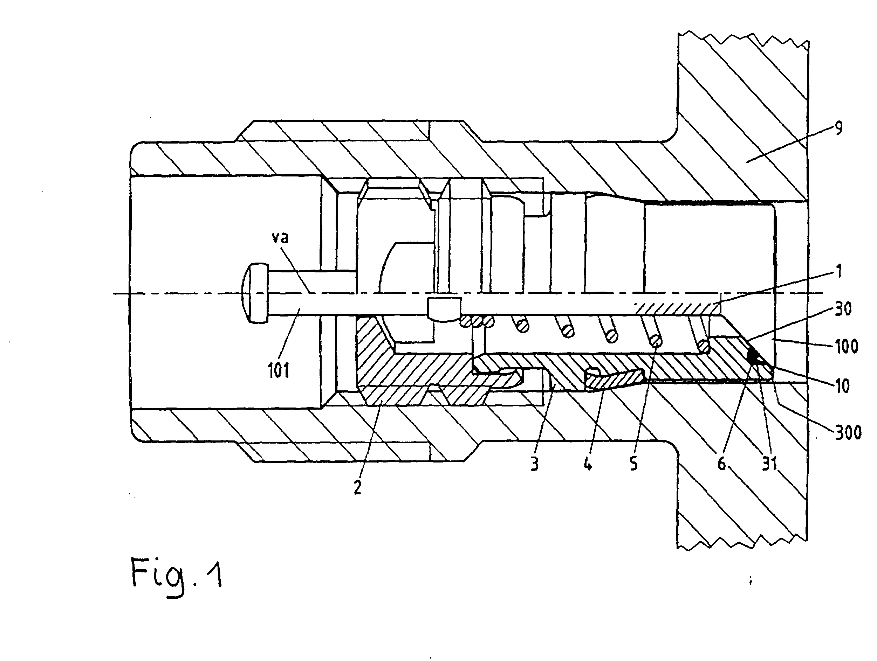

Die Fig. 1 zeigt ein insgesamt zusammengebautes Ventil 1, im Schließzustand, welches in die Wandung 9 eines Druckbehälters für die Aufnahme von Kohlendioxid-Kältemittel eingesetzt ist. Das Ventil 1 weist einen Ventilkörper bzw. ein Ventil-Gehäuse 3 auf, welcher bzw. welches nach oben hin mit einer Art Überwurfmutter 2 abgeschlossen ist und in welchem - unter der Belastung einer Feder 5 - stehend, der - eine kegelförmige Dichtfläche 10 aufweisende - Ventilteller bzw. -kegel 100 mit seinem Schaft 101 entlang der Ventilachse va auf und ab bzw. hin und her verschiebbar ist. Außen am Ventilkörper 3 ist eine Dichtung 4 in einer Nut 31 angeordnet.

In die kegelige Dichtfläche 30 des Ventilsitzes 300 ist eine Ringnut 31 eingetieft, in welche ein Dichtungs-Toroid 6 mit etwa R-förmiger Querschnitts- bzw. Profil-Gestalt eingesetzt bzw. einvulkanisiert ist.

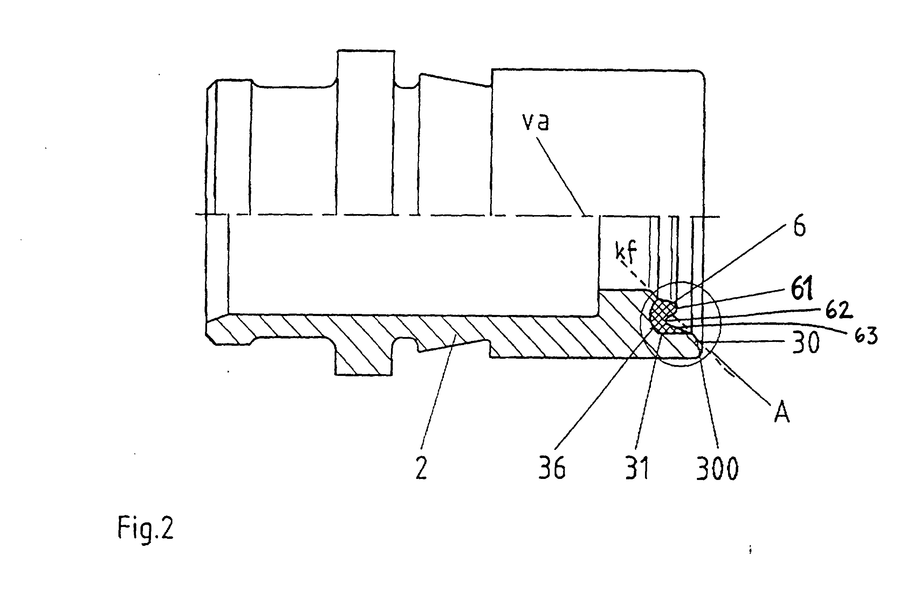

Die Teil-Schnitt-Ansicht der Fig. 2 zeigt nur mehr das Ventilgehäuse 3, mit dem ebenfalls einer Kegelmantelfläche kf entsprechend geformten Ventil-Sitz 300, dessen Dichtfläche 30 durch eine in den Ventilsitz 300 eingetiefte Nut 31 etwa mittig geteilt ist. Die Nut 31 weist eine konkav gekrümmte Rückwand 36 bzw. einen derartigen Nutgrund auf, und in diese Nut 31 ist das Dichtungs-Toroid 6, welches an seiner der Ventilachse va zugewandten Seite eine etwa der Kontur des Buchstaben "R" mit einem oberen ausbauchenden R-Bogen 61 und einer daran anschließenden Einbuchtung 62 mit R-Schrägbalken 61 entsprechendes Querschnitts-Profil aufweist, einvulkanisiert.

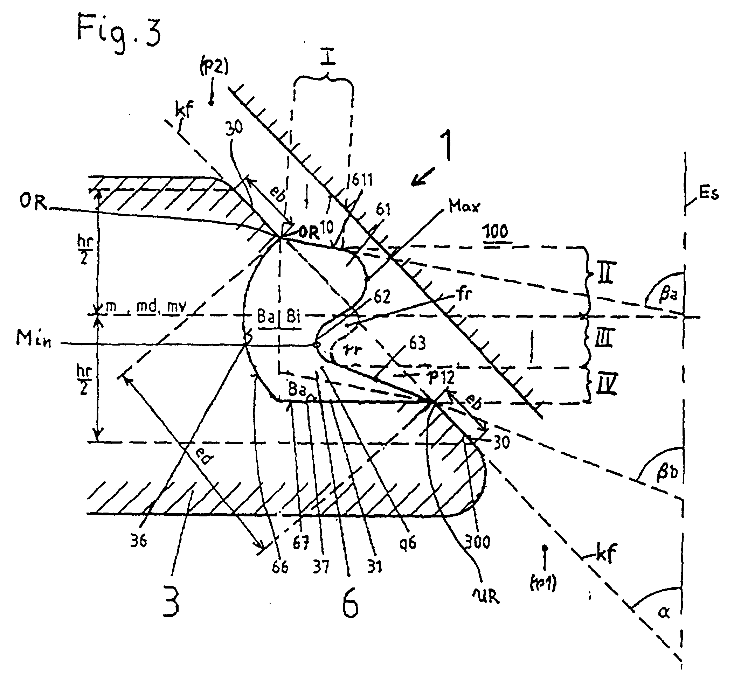

Die Fig. 3 zeigt in einer detaillierten Schnittansicht die Anordnung des Dichtungs-Toroides 6 in der Nut 31 des Ventilsitzes 300 im Ventilkörper 3. Etwa mittig ist der Ventilsitz 300, dessen Dichtfläche 30 und letztlich auch die Dichtfläche 10 des Ventilkegels 100 durch die in halber Höhe hr/2 des durch die Dichtfläche 30 des Ventilsitzes 300 gegebenen Kegels angeordneten, entsprechenden zylindrischen Mittelflächen mn, md, mv von Ringnut 31, Dichtring 6 und Ventilkegel 100 geteilt. Die mittig angeordnete Ringnut 31 weist an ihrer Oberseite keine quer zur Ventilachse va sich erstreckende Nut-Wandung auf, sondern beginnt direkt am Rand zur Ventilsitz-Kegelfläche 30, kf hin, an dem oberen Nut-Kantenrand OR mit einer radial gewölbten, also konkav gekrümmten Nutgrund-Wandungsfläche 36, die sich abwärts erstreckt und schließlich in die zylindrische Basisfläche 37 übergeht, welche sich parallel zur Ventilachse va bis zum unteren Nutrand UR hin erstreckt. In die genannte Ringnut 31 ist mit seiner - entsprechend dem konkaven Nutgrund 36 ebenfalls radial gewölbten - Peripherie- bzw. Außenfläche 66 und mit seiner Basisfläche 67 das Dichtungs-Toroid 6 eingeklebt, bevorzugterweise jedoch einvulkanisiert.

Durch eine unterbrochene Linie ist die Gesamt-Querschnittsfläche q6 des Dichtungs-Toroids 6 in einen Außenbereich Ba mit den Flächen 66 und 67 und in einen radial nach innen zur Achse va hin weisenden Innenbereich Bi geteilt. Der Innenbereich Bi des Dichtungs-Toroids 6 ist, ähnlich wie die nach innen zur Ventilachse va hin gerichtete "Vorderseite" des Großbuchstabens "R", mit einer oberen, am oberen Rand OR des Nutgrunds 36 beginnenden, nach außen sofort über die durch die Dichtfläche 30 des Ventilsitzes 300 definierte Kegelfläche kf hinaus ansteigenden R-Bogen-Ausbuchtung 61, Kontur-Zone II, mit einer daran anschließenden, sich nach Durchlaufen eines Maximums Max unter die genannte Kegelfläche kf zurückziehenden Einbuchtung 62, Zone III, mit einem dort ausgebildeten Minimum Min gebildet, von welcher sich dann - in sanfter Krümmung und tangential übergehend - schräg zur Ventilachse va, der R-Balken 63, Zone IV, von unten her bis zum Schnitt mit der Kegelfläche kf bzw. zum dortigen unteren Nutrand (UR), hinzieht. Die beiden Dichtflächen-Streifen 30 beiderseits der etwa mittig angeordneten Ringnut 31 haben im wesentlichen untereinander gleiche Breiten eb. Jeder dieser Streifen ist jedoch weniger breit als die Erstreckungsbreite ed des Ring-Toroids 6.

Die sich von der Kegelfläche kf bzw. 30 sofort weg erhebende, die Kontur-Zone I bildende R-Ansatzgerade 611 der R-Ausbuchtung 61, Zone II, und die R-Balkengerade 631, Zone IV, sind beide in Winkeln βa, βb von jeweils unter 90° zu einer zur Ventilachse va senkrechten Ebene Es geneigt. Die Dichtfläche 30 des Ventilsitzes 300 selbst bzw. die dieselbe definierende Kegelfläche kf sind unter einem, gegebenenfalls wesentlich geringeren, Winkel α von bevorzugt um die oder exakt 45° zur genannten Ebene Es geneigt angeordnet. Bei dieser Winkelneigung a der Dichtflächen 30 und 10 von Ventilsitz 300 und Ventilteller 100 haben die Dichtflächen selbst schon eine erhebliche zur Dichtwirkung beitragende Flächenausdehnung. Bei der genannten Neigung im Bereich von 45° wird beim Öffnen des Ventils 1 jedoch auch ein das rasche Befüllen des CO₂-Druckbehälters begünstigender, breiterer Durchgang für das Kältemittel erreicht.

Die Neigungen der beiden oben genannten, den Kontur-Zonen I und IV entsprechenden Geraden 611 und 63 der Querschnitts-Kontur des Dichtungs-Toroids 6 bringen den Vorteil, dass bei Annäherung des Ventiltellers 100 bzw. von dessen Dichtfläche 10 an den Ventilsitz 300 bzw. an dessen Dichtfläche 30 im Falle der Druckeinwirkung durch das Kältemittel, insbesondere Kohlendioxid, die R-Bogen-Ausbuchtung 61, Zone II, etwa in Richtung von der Ventilachse va weg abwärts gleitend in die Einbuchtung 62, Zone III, bzw. in die von derselben und vom R-Balken 63, 631, Zone IV, frei gelassene Fläche fr bzw. zum R-Balken 63, Zone IV, hin gedrückt wird und schließlich bei geschlossenem Ventil 1 eine hohe Dichtwirkung aufweisende, durch unterbrochene Linien angedeutete, druck-verformte Kontur-Gestalt mit einem Restraum rr annimmt. In der Fig. 3 sind weiters die Druckverhältnisse eingezeichnet, beginnend vom Hochdruck p1 über den in der Einbuchtung 62 bzw. im Restraum rr herrschenden mittleren Druck p12 bis zum niederen Außen-Druck p2.

In der Fig. 3 angedeutet sind weiters noch die "Halb-Höhenlagen" hr/2 der Ventilsitz-, der Dichtungs-Toroid- und der Ventilteller-Mittelflächen mn, md, mv.

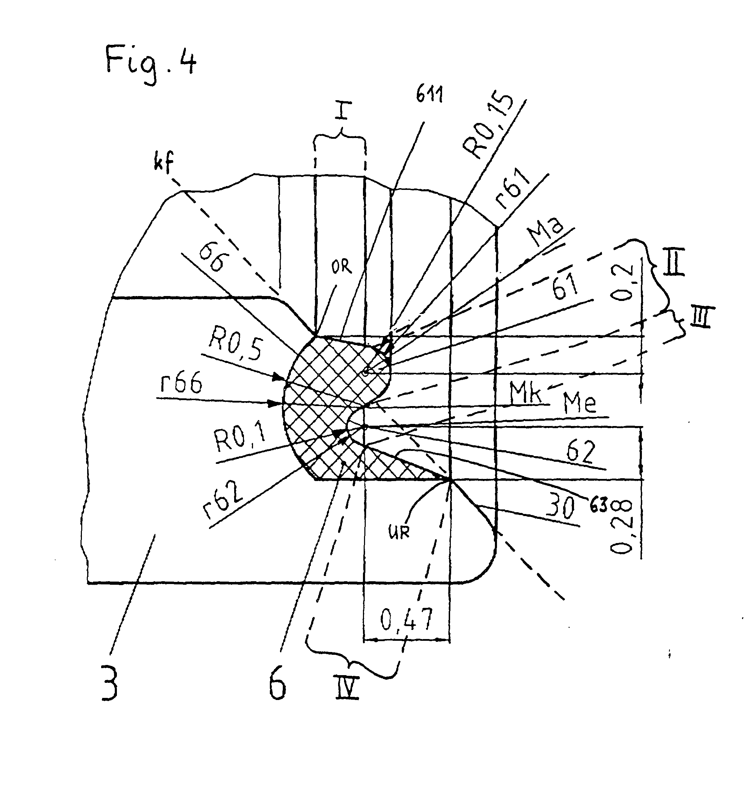

Bei gleichbleibenden Bezugszeichen-Bedeutungen zeigt die im Rahmen der Erfindung besonders bevorzugte Dimensionierungs-Verhältnissse wiedergebende Fig. 4 die entsprechenden Relativlagen der Kreisbogen-Krümmungs-Mittelpunkte Mk für die Konvex- bzw. Außenfläche 66 des Dichtungs-Toroids 6 mit dem Radius r66, Ma für die R-Ausbuchtung 61, Zone II, mit dem Kreisbogen-Radius r61 und Me für die R-Einbuchtung 63, Zone III, mit dem Radius r63.

Die Kontur-Zone II zeigt, zusammen mit der Konturzone III einen etwa dem Buchstaben "S" ähnlichen Verlauf.

Von der Zone II zur nach der anderen Seite sich wölbenden Zone III kann der Übergang von bloß zwei aneinander-grenzenden, ineinander übergehenden, zueinander inversen Kreisbögen sein, es kann dort aber auch eine Zwischen-Zone II/III in Form eines ganz kurzen "tangentialen" Geradenstückes angeordnet sein.

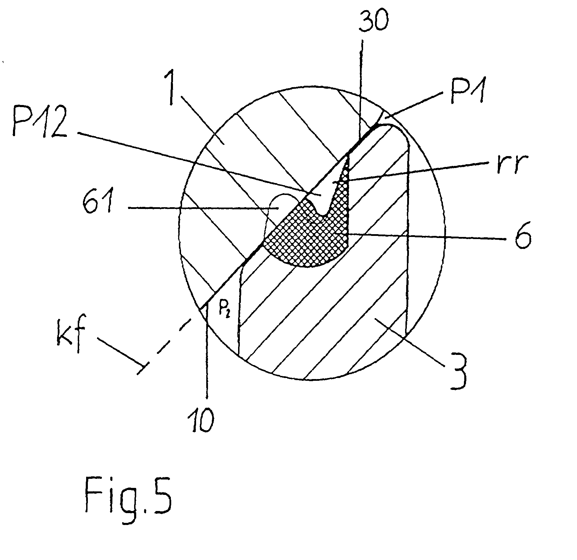

Die Schnittansicht der Fig. 5 zeigt - die Fig. 3 ergänzend - die durch Verdrängung eines Teiles der Ausbuchtung 61 (ursprüngliche Zonen I, II der R-Querschnitts-Fläche des nicht druckbelasteten Dichtungs-Toroids 6) bei aneinander gepressten Dichtflächen 10 und 30 von Ventilteller 1 und Ventilkörper 3 unter hohem Druck p2 sich ausbildende Querschnittsgestalt des seine Dichtfunktion ausübenden Dichtungs-Toroids 6:

Bei geschlossenem Ventil 1 bleibt, wie ersichtlich, der kleine, unter die durch die Dichtflächen 30, 10 definierte Kegelfläche kf gedrängte Restraum rr über, in welchem sich ein zwischen dem Atmosphärendruck p1 der Außenseite und dem Behälter-Innendruck p2 liegender mittlerer Druck p12 einstellt.

## Patentansprüche

1. Ventil, bzw. Befüllventil, für die Hochdruck-Technik, bzw. für Druckbehälter von mit einem fluorkohlenwasserstoff-freien, leicht verflüssigbaren Kältemittel, wie CO₂, betreibbaren Kältemaschinen, insbesondere für Klimaanlagen von Fahrzeugen u. dgl., mit einer zwischen den kegeligen Dichtflächen eines Ventilgehäuses bzw. -sitzes und eines federbelasteten Ventilkegels, insbesondere Ventiltellers, angeordneten und dort wirksamen Dichtung, welche als in einer in die Dichtfläche (30) des Ventilsitzes (300) des Ventilkörpers (3) eingetieften Ringnut (31) angeordnetes Dichtungs-Toroid (6) aus einem Elastomer-Material ausgebildet ist, **dadurch gekennzeichnet,**
**dass** der der Ventilachse (va) zugekehrte Innenbereich (Bi) des Dichtungs-Toroids (6) im wesentlichen eine der Kontur der Vorderseite des Großbuchstabens "R" entsprechende Querschnitts-Gestalt bzw. -Kontur mit einer oberen, gleich vom oberen Rand (OR) der Ringnut (31) zur Ventilsitz-Dichtfläche (30) hin über die durch die Ventilsitz-Dichtfläche (30) definierte Kegelfläche (kf) in Richtung der Ventilachse (va) hinaus ragenden dem oberen Bogen des Buchstabens "R" entsprechenden Ausbuchtung bzw. Aufwölbung (61) mit einem ventilachsen-nahen Maximum (Max) und einer an diese R-Ausbuchtung (61) anschließenden, von der Ventilachse (va) weg, sich unter die soeben definierte Kegelfläche (kf) der Ventilsitz-Dichtfläche (30) zurückziehenden R-Einbuchtung (62) mit einem ventilachsen-fernen Minimum (Min) aufweist, von welcher sich der Balken (63) des Buchstaberys "R" wieder zur Ventilsitz-Dichtfläche (30) bzw. zur dieselbe definierenden Kegelfläche (kf) hin schräg erstreckt, wobei die genannte Ausbuchtung (61), die Einbuchtung (62) und der R-Balken (63) "schleifend" ineinander übergehen.

2. Ventil bzw. Befüllventil nach Anspruch 1, **dadurch gekennzeichnet,**
- **dass** die Querschnitts-Kontur des Innenbereiches (Bi) des Dichtungs-Toroids (6) vom (oberen) Beginn der - unmittelbar vom oberen Rand (OR) der Ringnut (31) zur Ventilsitz-Kegelfläche (30, kf) hin beginnend - die Ventilsitz-Kegelfläche (kf) überschreitenden R-Bogen-Ausbuchtung (61) über die sich danach unter die genannte Kegelfläche (kf) zurückziehende Einbuchtung (62) hinweg bis zum (unteren) Fuß-Ende des R-Balkens (63) bzw. bis zum unteren Nutrand (UR) hin durchgehend einen stetigen Kurvenverlauf ohne Kanten, Knicke, Unstetigkeitsstellen od.dgl. mit im wesentlichen vier - nach Art von gekrümmten Kurven und tangential in diese einbindenden Geraden - ineinander übergehenden Kontur-Zonen (I, II, III, IV) aufweist, wobei
- die Zone (I) als den R-Bogenansatz (611) bildende, unmittelbar vom oberen Nut-Rand (OR) weg über die Ventilsitz-Kegelfläche (kf) hinaus sich erhebende R-Bogenansatz-Gerade mit einem Neigungswinkel (βa)zu einer zur Ventilachse (va) senkrechten Ebene (Es) verläuft, welcher größer ist als der Neigungswinkel (α) der Erzeugenden der Ventilsitz-Kegelfläche (kf) zur genannten Ebene (Es),
- die Zone (II) durch einen sich tangential an die Zone (I) anschließenden, über ein, der Ventilachse (va) nahes Maximum (Max) hinweg bis etwa zur Ventilsitz-Kegelfläche (kf) zurück verlaufenden, die R-Bogen-Ausbuchtung (63) bildenden R-Ausbuchtungs-Kreisbogen, und
- die Zone (III) durch einen von der Zone (II) her kontinuierlich und stetig - etwa "S"-artig - übergehenden, die R-Einbuchtung (62) bildenden, über ein - von der Ventilachse (va) entferntes - Minimum (Min) hinweg sich ziehenden R-Einbuchtungs-Kreisbogen gebildet sind, und dass schließlich
- die Zone (IV) als aus dem R-Einbuchtungs-Kreisbogen der Zone III tangential auslaufende, mit einem Neigungswinkel (βb) zur Ebene (Es), der ebenfalls größer ist als der Neigungswinkel (α) der Erzeugenden der Ventilsitz-Kegelfläche (kf), wieder bis zur eben genannten Ventilsitz-Kegelfläche (kf) hin bis zum unteren Nut-Rand (UR) sich wegerstreckende, den R-Balken (63) bildende, schräge R-Balken-Gerade ausgebildet ist.

3. Ventil nach Anspruch 1 oder 2, **dadurch gekennzeichnet,**
- **dass** der Radius (r61) des R-Ausbuchtungs-Kreisbogens (61), (Zone II) größer ist als der Radius (r62) des R-Einbuchtungs-Kreisbogens (62), (Zone III), wobei es bevorzugt ist, wenn das Verhältnis der Radien r61 : r62 = (1,4 bis 1,6): 1, insbesondere 1,5 : 1, beträgt, und/oder
- **dass** der Neigungswinkel (βa) der R-Bogenansatz-Geraden (611) (Zone I) zur Ebene (Es) gleich ist wie, oder vorzugsweise größer ist als der Neigungswinkel (βb) der R-Balken-Gerade (63) (Zone IV) zur Ebene (Es), wobei es bevorzugt ist, wenn das Verhältnis der genannten Neigungswinkel (in Winkelgraden) (βα): (βb) zueinander (1,15 bis 1,05): 1, insbesondere 1,10 : 1, beträgt, und/oder
- **dass** das Verhältnis des Neigungswinkels (βα) der R-Bogenansatz-Geraden (611) (Zone I) zur Ebene (Es) zum Winkel (α) der Erzeugenden der Ventilsitz-Kegelfläche (kf) zumindest 1,2 : 1 und höchstens 1,9 : 1, vorzugsweise jedoch (1,55 bis 1,8) : 1, beträgt.

4. Ventil nach einem der Ansprüche 1 bis 3, **dadurch gekennzeichnet, dass** das die - durch die Dichtfläche (30) des Ventil-Sitzes (300) definierte - Kegelfläche (kf) überragende, gesamte Volumen der R-Bogen-Ausbuchtung (61) des Dichtungs-Toroids (6) - im vom Druck nicht belasteten Zustand - im wesentlichen gleich ist mit dem oder größer ist als das gesamte Volumen des sich unter die, wie eben definierte Ventilsitz-Kegelfläche (kf) zurückziehenden von den Kontur-Zonen (III) und (IV) und der Ventilsitz-Kegelfläche (kf) begrenzten Freiraums (fr).

5. Ventil nach einem der Ansprüche 1 bis 4, **dadurch gekennzeichnet,**
- **dass** die, bevorzugt durch Vulkanisation, an den entsprechend - insbesondere kreisbogenförmig - konkav gekrümmt geformten Grund (36) der Ringnut (31) des Ventil-Sitzes (30) materialschlüssig gebundene, etwa die Rückseite des Buchstabens "R" bildende Peripherie-Fläche (66) des Dichtungs-Toroids (6) nach außen - insbesondere kreisbogenförmig - konvex gekrümmt ist, und/oder
- **dass** die R-Standfläche bzw. Basisfläche (67) des R-artige Querschnitts-Gestalt aufweisenden Dichtungs-Toroids (6) und die entsprechende Ringnut-Wandfläche (37) als sich parallel zur Ventilachse (va) erstreckende zylindrische Außenflächen ausgebildet sind und
- **dass** die R-Standfläche bzw. Basisfläche (67) des Dichtungs-Toroids (6) - ebenso wie dessen konvex gekrümmte Peripherie-Fläche (66) an die entsprechende konkave Nut-Grundfläche (36) - bevorzugt durch Vulkanisation, materialschlüssig an die Wandfläche (37) der Ringnut (31) gebunden ist.

6. Ventil nach einem der Ansprüche 1 bis 5, **dadurch gekennzeichnet,**
- **dass** die der konvex gekrümmten Peripherie-Fläche (66) des Ring-Toroids (6) entsprechend gekrümmte Konkav-Fläche (36) des Grunds der Ringnut (31) des Ventil-Sitzes (300) direkt an der kegeligen Dichtfläche (30) des Ventil-Sitzes (300) endet bzw. dass die konvex gekrümmte R-Rückseite bzw. Peripherie-Fläche (66) des R-Querschnittes des Dichtungs-Toroids (6) im Schnittpunkt mit der Ventilsitz-Kegelfläche (kf) über einen oberen Rand-Knick (OR) od.dgl. unmittelbar in die R-Bogenansatz-Gerade (611), Zone (I) übergeht, und/oder
- **dass** die in die Ausbuchtung (61) des R-Bogens des Ring-Toroid-Querschnitts (q6) übergehende, R-Bogenansatz-Gerade (611), (Zone I) und die aus der Einbuchtung (62), (Zone III) auslaufende, dem schrägen R-Balken (63) entsprechende R-Balken-Gerade (631) in, gegebenenfalls untereinander gleichen, Winkeln (βa, βb) von mehr als 55°, insbesondere von 70 bis 85°, zur Ebene (Es) geneigt sind.

7. Ventil nach einem der Ansprüche 1 bis 6, **dadurch gekennzeichnet,**
- **dass** die Dichtflächen (30, 10) von Ventil-Sitz (300) und Ventil-Kegel (100) bzw. die Kegelfläche (kf) des Ventil-Sitzes (300) in einem Neigungswinkel (α) von 40 bis 50°, bevorzugt in einem Neigungswinkel (α) von 45° (± 1,5°), zur Ventilachse (va) geneigt ausgebildet sind bzw. ist, und/oder
- **dass** die Mittel-Flächen (mn, md) der Ventilsitz-Ringnut (31) und des an dieselbe anvulkanisierten Dichtungs-Toroids (6) mit einer in der halben Höhe (hr/2) eines durch die Dichtfläche (30) des Ventil-Sitzes (300) definierten Kegelstumpfes eingezogenen, zur Ventilachse (va) parallelen Mittel-Fläche (mv) des Ventilkegels (11) in dessen Stellung bei geschlossenem Ventil (1) übereinstimmen, und/oder
- **dass** jedes der beidseitig des Dichtungs-Toroids (6) bzw. der dasselbe beherbergenden Ringnut (31) sich erstreckenden Kegelstumpf-Bänder bzw. - Streifen der Dichtfläche (30) des Ventilsitzes (300) untereinander gleiche Erzeugenden-Breiten (eb) aufweist, welche jeweils geringer sind, als die Erzeugenden-Breiten (ed) des Dichtungs-Toroids (6).

8. Ventil nach einem der Ansprüche 1 bis 7, **dadurch gekennzeichnet, dass** die Verhältnisse der Krümmungs-Radien (r66, r61, r62) der die Querschnittsfläche des Dichtungs-Toroids (6) mit der R-artigen Querschnitts-Gestalt begrenzenden, Ring-Konvex- bzw. -Peripheriefläche (66) und der kreisbogenförmigen Kontur-Zonen (II, III) zueinander die folgenden sind:
| | | |
|---|---|---|
| Radius (r66) der Ring-Konvexfläche (66), Zone II | 4,5 bis 5,5, insbesondere | 5 |
| zu | zu | zu |
| Radius (r61) der R-Bogen-Ausbuchtung (61), Zone II | 1,4 bis 1,6, insbesondere | 1,5 |
| zu | zu | zu |
| Radius (r62) der Einbuchtung (62), Zone III zwischen R-Bogen (61), Zone II und R-Balken (63), Zone IV: | 1 | 1 |

9. Ventil nach einem der Ansprüche 1 bis 8, **dadurch gekennzeichnet, dass** die auf den Mittelpunkt (Mk) des Krümmungskreises der konvexen Peripherie-Fläche (66) des Dichtungs-Toroids (6) als Bezugspunkt (x = 0, y = 0) bezogenen Verhältnisse der Koordinaten x und y, untereinander die folgenden sind, wobei die Maßgrößen die gleichen sind wie bei den Maßverhältnis-Angaben der Ansprüche 3 und 8:
| | Koordinaten | | allfällige Abweichung |
|---|---|---|---|
| | x | y | |
| Mittelpunkt (Ma) der R-Bogen-Ausbuchtungs-Krümmung,Zone II | 0 | +2 | (±0,2) |
| zu | zu | | |
| Mittelpunkt (Me) der R-Einbuchtungs-Krümmung, Zone III zwischen R-Bogen, Zone II und R-Balken, Zone IV | 0 | -1 | (±0,1) |

10. Ventil nach einem der Ansprüche 1 bis 9, **dadurch gekennzeichnet,**
- **dass** bei unter dem Druck des Kältemittels, insbesondere CO₂, stehendem, geschlossenem Ventil (100), die R-Ausbuchtung (61), (Zone II) des Dichtungs-Toroid-Innenbereiches (Bi) bzw. deren durch die (Hoch-)Druck-Einwirkung verringertes Volumen, durch die Dichtfläche (10) des Ventilkegels (100) im wesentlichen in Richtung zum R-Schrägbalken (63), (Zone IV) hin zum bzw. in den durch die R-Einbuchtung (62), (Zone III), den R-Balken (63) und der Kegelfläche (kf) gegebenen Freiraum (fr) preßverformend verschieb- bzw. verdrängbar ist und/oder
- **dass** bei unter (Hoch-)Druck-Einwirkung geschlossenem Ventil (100) mit aneinandergepreßten Dichtflächen (30, 10) von Ventil-Sitz (300) und Ventil-Teller (100) das - die durch die Dichtfläche (30) des Ventil-Sitzes (300) definierte Kegelfläche (kf) - überragende Volumen der R-Bogen-Ausbuchtung (61) des Dichtungs-Toroids (6) in den durch die sich unter die wie eben definierte Kegelfläche (kf) zurückziehende Einbuchtung gebildeten Freiraum (fr) verdrängbar ist, wobei ein Rest-Freiraum (rr), bevorzugt im Bereich von 3 bis 7%, des eben genannten Freiraums (fr) im nicht druckbelasteten Zustand bestehen bleibt.

11. Ventil nach einem der Ansprüche 1 bis 10, **dadurch gekennzeichnet ,**
- **dass** das Dichtungs-Toroid (31) aus einem Elastomer-Dichtungs-Werkstoff auf Basis eines Fluor-Polymers, insbesondere Fluorkautschuk ("FPM" nach DIN, "FKM" nach ASTM), vorzugsweise aus einem Handelsprodukt mit der Bezeichnung SIMRIT®, insbesondere des Typs 85 FPM, mit folgenden Eigenschaftswerten gefertigt ist:
| **Eigenschaft** | | **Wert:** | **bevorzugter Wert:** |
|---|---|---|---|
| Dichte, g/cm³ | (DIN 53479) | 1,8 - 19 | 1,85 |
| Härte, Shore A | (DIN 53505) | 80 - 90 | 85 |
| Rückprall-Elastizität, % | (DIN 53512) | 7 - 15 | 10 |
| Spannungswert 100 %, N/mm² | (DIN 53504) | 6,5 - 7,0 | 6,8 |
| Zugfestigkeit, N/mm² | (DIN 53504) | 20 - 22 | 20,9 |
| Reissdehnung, % | (DIN 53504) | 235 - 255 | 244 |
| Druckverformungsrest % 22 h/150°C | (DIN 52517) | 27 - 33 | 30 |
und/oder
- **dass** der Ventilsitzkörper (3) bzw. zumindest dessen Ringnut (31) aus einem einer Auf-Vulkanisation von Elastomeren zugänglichen Metall bzw. aus einer derartigen Metall-Legierung, bevorzugt aus Bronze, Messing oder Aluminium, gebildet ist, und/oder
- **dass** die Dichtflächen (30, 10) des Ventil-Sitzes (300) und des Ventil-Tellers (100) eine - zumindest eine metallische Grobabdichtung gewährleistende - Oberflächen-Bearbeitungs-Qualität, bevorzugt eine Rauheit von maximal R_{z}4, aufweisen.

## Claims

1. A valve, or filler valve, for high-pressure technology, or for pressure tanks of refrigerating machines operable with a fluorocarbon-free, easily liquefiable refrigerant, such as CO₂, particularly for air-conditioning systems of vehicles and the like, comprising a seal arranged between the conical sealing surfaces of a valve housing or valve seat and a spring-loaded valve cone, particularly a valve head, and acting at that location, which seal is a sealing toroid (6) made of an elastomeric material, arranged in an annular groove (31) recessed in the sealing surface (30) of the valve seat (300) of the valve body (3), **characterised in that** the inner region (Bi) of the sealing toroid (6) directed towards the valve axis (va) has substantially a cross-sectional shape or cross-sectional contour corresponding to the contour of the front side of the capital letter "R" with an upper convexity or bulge (61) projecting directly from the upper edge (OR) of the annular groove (31) towards the valve seat sealing surface (30) beyond the conical surface (kf), defined by the valve seat sealing surface (30), in the direction of the valve axis (va), and corresponding to the upper arc of the letter "R", with a maximum (Max) close to the valve axis, and an R-indentation (62) adjoining this R-convexity (61), extending back under the just-defined conical surface (kf) of the valve seat sealing surface (30) away from the valve axis (va), with a minimum (Min) remote from the valve axis, from which the stroke (63) of the letter "R" extends obliquely towards the valve seat sealing surface (30) again or towards the same defining conical surface (kf), wherein the said convexity (61), the indentation (62) and the stroke (63) of the R "wind" one into another.

2. A valve or filler valve according to Claim 1, **characterised**
- **in that** the cross-sectional contour of the inner region (Bi) of the sealing toroid (6) consistently has, from the (upper) beginning of the R-arc convexity (61) ― starting directly from the upper edge (OR) of the annular groove (31) towards the valve seat conical surface (30, kf), crossing the valve seat conical surface (kf), over the indentation (62), extending back thereafter under the said conical surface (kf), to the (lower) bottom end of the stroke (63) of the R or to the lower groove edge (UR), a constant curve shape without edges, kinks, discontinuities or the like with substantially four contour zones (I, II, III, IV) extending into one another ― in the manner of arcuate curves and straight lines connecting tangentially into them, wherein
- the zone (I) extends as an R-stroke extension straight line, forming the R-arc extension (611) and rising directly away from the upper groove edge (OR) beyond the valve seat conical surface (kf), with an angle of inclination (βa) to a plane (Es) perpendicular to the valve axis (va) which is greater than the angle of inclination (α) of the generatrix of the valve seat conical surface (kf) to the said plane (Es),
- the zone (II) is formed by an R-convexity circular arc tangentially adjoining the zone (I), extending over a maximum (Max) close to the valve axis (va) back approximately to the valve seat conical surface (kf), and forming the R-arc convexity (63) [sic, recte (61)], and
- the zone (III) is formed by an R-indentation circular arc extending from the zone (II) continuously and consistently ― approximately in the manner of an "S", forming the R-indentation (62), and extending across a minimum (Min) ― remote from the valve axis (va), and in that, lastly,
- the zone (IV) is an oblique R-stroke straight line, running tangentially out of the R-indentation circular arc of zone III, extending away with an angle of inclination (βb) to the plane (Es) which is likewise greater than the angle of inclination (α) of the generatrix of the valve seat conical surface (kf), again to the just-mentioned valve seat conical surface (kf) as far as the lower groove edge (UR), and forming the R-stroke (63).

3. A valve according to Claim 1 or 2, **characterised**
- **in that** the radius (r61) of the R-convexity circular arc (61), (zone II), is greater than the radius (r62) of the R-indentation circular arc (62), (zone III), wherein it is preferred that the ratio of the radii r61 : r62 = (1.4 to 1.6) : 1, particularly 1.5 : 1, and/or
- **in that** the angle of inclination (βa) of the R-arc extension straight line (611) (zone I) to the plane (Es) is the same as, or preferably greater than, the angle of inclination (βb) of the R-stroke straight line (63) (zone IV) to the plane (Es), wherein it is preferred that the ratio of the said angles of inclination (in angle degrees) (βa) : (βb) to one another is (1.15 to 1.05) : 1, particularly 1.10 : 1, and/or
- **in that** the ratio of the angle of inclination (βα) [sic, recte (βa)] of the R-arc extension straight line (611) (zone I) to the plane (Es) to the angle (α) of the generatrix of the valve seat conical surface (kf) is at least 1.2 : 1 and at most 1.9 : 1, but preferably (1.55 to 1.8) : 1.

4. A valve according to one of Claims 1 to 3, **characterised**
**in that** the total volume of the R-arc convexity (61) of the sealing toroid (6) projecting above the conical surface (kf) ― defined by the sealing surface (30) of the valve seat (300) - is ― in the non-pressure-loaded state ― substantially the same as or greater than the total volume of the free space (fr) extending back under the just-defined valve seat conical surface (kf) and bounded by the contour zones (III) and (IV) and the valve seat conical surface (kf).

5. A valve according to one of Claims 1 to 4, **characterised**
- **in that** the peripheral surface (66) of the sealing toroid (6), bonded in a material-locking manner, preferably by vulcanisation, to the base (36) of the annular groove (31) of the valve seat (30), which base is correspondingly shaped so as to be concavely curved ― particularly circular arc-shaped, and approximately forming the back of the letter "R", is outwardly convexly curved ― particularly circular arc-shaped, and/or
- **in that** the R-foot surface or base surface (67) of the sealing toroid (6), which has an R-like cross-sectional shape, and the corresponding annular groove wall surface (37) are cylindrical outer surfaces extending parallel to the valve axis (va), and
- **in that** the R-foot surface or base surface (67) of the sealing toroid (6) is bonded ― in the same way as the convexly curved peripheral surface (66) thereof [is bonded] to the corresponding concave groove base surface (36) - in a material-locking manner, preferably by vulcanisation, to the wall surface (37) of the annular groove (31).

6. A valve according to one of Claims 1 to 5, **characterised**
- **in that** the concave surface (36) of the base of the annular groove (31) of the valve seat (300), which is curved so as to correspond to the convexly curved peripheral surface (66) of the annular toroid (6), ends directly at the conical sealing surface (30) of the valve seat (300), or in that the convexly curved back of the R or peripheral surface (66) of the R-cross-section of the sealing toroid (6) extends at the point of intersection with the valve seat conical surface (kf) via an upper edge kink (OR) or the like directly into the R-arc extension straight line (611), zone (I), and/or
- **in that** the R-arc extension straight line (611), (zone I), extending into the convexity (61) of the R-arc of the annular toroid cross-section (q6), and the corresponding R-stroke straight line (631) running out of the indentation (62), (zone III), and corresponding to the oblique R-stroke (63) are inclined at optionally mutually identical angles (βa, βb) of more than 55°, particularly 70 to 85°, to the plane (Es).

7. A valve according to one of Claims 1 to 6, **characterised**
- **in that** the sealing surfaces (30, 10) of the valve seat (300) and the valve cone (100) or the conical surface (kf) of the valve seat (300) are or is designed so as to be inclined at an angle of inclination (α) of 40 to 50°, preferably at an angle of inclination (α) of 45° (± 1.5°), to the valve axis (va), and/or
- **in that** the centre surfaces (mn, md) of the valve seat annular groove (31) and of the sealing toroid (6) vulcanised thereto coincide with a centre surface (mv) of the valve cone (11), [which is] drawn in at half the height (hr/2) of a truncated cone defined by the sealing surface (30) of the valve seat (300), and [which is] parallel to the valve axis (va), in the position of the said valve cone when the valve is closed (1), and/or
- **in that** each of the truncated cone bands or truncated cone strips of the sealing surface (30) of the valve seat (300), extending on both sides of the sealing toroid (6) or of the annular groove (31) accommodating the same, have mutually identical generatrix widths (eb), each of which are smaller than the generatrix widths (ed) of the sealing toroid (6).

8. A valve according to one of Claims 1 to 7, **characterised**
**in that** the ratios of the radii of curvature (r66, r61, r62) of the annular convex or annular peripheral surface (66) bounding the cross-sectional surface of the sealing toroid (6) with the R-like cross-sectional shape, and of the circular arc-shaped contour zones (II, III) to one another are the following:
| | | | |
|---|---|---|---|
| radius (r66) of the annular convex surface (66), zone II | 4.5 to 5.5, | particularly | 5 |
| to | to | | to |
| radius (r61) of the R-arc convexity (61), zone II | 1.4 to 1.6, | particularly | 1.5 |
| to | to | | to |
| radius (r62) of the indentation (62), zone III | | | |
| between the R-arc (61), zone II and the R-stroke (63), zone IV 1 | | | 1 |

9. A valve according to one of Claims 1 to 8, **characterised**
**in that** the ratios of the coordinates x and y to one another, related to the centre point (Mk) of the circle of curvature of the convex peripheral surface (66) of the sealing toroid (6) as reference point (x = 0, y = 0), are the following, where the dimension variables are the same as in the dimension ratio data of Claims 3 and 8:
| | coordinates | | possible deviation |
|---|---|---|---|
| | x | y | |
| centre point (Ma) of the R-arc convexity curve, zone II | 0 | +2 | (±0.2) |
| to | | to | |
| centre point (Me) of the R-indentation curve, zone III | | | |
| between the R-arc, zone II and the R-stroke, zone IV | 0 | -1 | (±0.1) |

10. A valve according to one of Claims 1 to 9, **characterised**
- **in that**, when the valve (100) is closed and under the pressure of the refrigerant, particularly CO₂, the R-convexity (61), (zone II), of the sealing toroid inner region (Bi), or the volume thereof reduced by the (high) pressure effect, is movable or displaceable in a compressively deforming manner by the sealing surface (10) of the valve cone (100) substantially in the direction towards the oblique R-stroke (63), (zone IV), to or into the free space (fr) created by the R-indentation (62), (zone III), the R-stroke (63) and the conical surface (kf), and/or
- **in that**, when the valve (100) is closed under the effect thereon of (high) pressure with sealing surfaces (30, 10) of the valve seat (300) and the valve head (100) pressed together, the volume of the R-arc convexity (61) of the sealing toroid (6) ― projecting above the conical surface (kf) defined by the sealing surface (30) of the valve seat (300) ― is displaceable into the free space (fr) formed by the indentation extending back under the just-defined conical surface (kf), wherein a residual free space (rr), preferably in the range of 3 to 7%, of the just-mentioned free space (fr) continues to exist in the non-pressure-loaded state.

11. A valve according to one of Claims 1 to 10, **characterised**
**in that** the sealing toroid (31) is manufactured from a fluoropolymer-based elastomer seal material, particularly fluorinated rubber ("FPM" according to DIN, "FKM" according to ASTM), preferably a commercial product with the name SIMRIT®, particularly of the 85 FPM type, with the following property values:
| **Property** | | **Value:** | **Preferred value:** |
|---|---|---|---|
| density, g/cm³ | (DIN 53479) | 1.8 - 19¹ | 1.85 |
| hardness, Shore A | (DIN 53505) | 80 - 90 | 85 |
| rebound elasticity, % | (DIN 53512) | 7 - 15 | 10 |
| tensile stress 100 %, N/mm² | (DIN 53504) | 6.5 - 7.0 | 6.8 |
| tensile strength, N/mm² | (DIN 53504) | 20 - 22 | 20.9 |
| elongation at tear, % | (DIN 53504) | 235 - 255 | 244 |
| compression set % 22 h/150°C | (DIN 52517) | 27 - 33 | 30 |
| | | | |
|---|---|---|---|
| ¹ 19 in the source text; presumably 1.9 is meant. | | | |
and/or
- **in that** the valve seat body (3), or at least the annular groove (31) thereof, is formed from a metal amenable to vulcanisation thereon of elastomers, or from such a metal alloy, preferably bronze, brass or aluminium, and/or
- **in that** the sealing surfaces (30, 10) of the valve seat (300) and of the valve head (100) have a surface-working quality - at least ensuring a rough metallic seal, preferably a roughness of a maximum of R_{z}4.

## Revendications

1. Soupape, ou soupape de remplissage pour technique haute pression, ou pour réservoirs sous pression de machines frigorifiques fonctionnant avec un frigorigène facilement liquéfiable et exempt d'hydrocarbure fluoré; comme le CO₂, en particulier pour systèmes de climatisation de véhicules et similaires, avec un joint agencé et actif entre les surfaces d'étanchéité coniques d'une cage ou d'un siège de soupape et d'un cône de soupape chargé par ressort, notamment d'une tête de soupape, ledit joint étant conçu sous la forme d'un toroïde d'étanchéité (6) en matériau élastomère, agencé dans une gorge annulaire (31) creusée dans la surface d'étanchéité (30) du siège de soupape (300) du corps de soupape (3), **caractérisée en ce que** la zone interne (BI) du toroïde d'étanchéité (6) qui est orientée vers l'axe de soupape (va) a sensiblement une section transversale dont la forme ou le contour correspond au contour du côté avant d'un « R » majuscule, avec un renflement ou ventre supérieur (61) correspondant à l'arc de cercle en haut de la lettre « R » et s'étendant directement depuis le bord supérieur (OR) de la gorge annulaire (31) en direction de la surface d'étanchéité du siège de soupape (30) en dépassant de la surface conique (kf) définie par la surface d'étanchéité du siège de soupape (30) en direction de l'axe de soupape (va), avec un maximum (max) proche de l'axe de soupape et une échancrure de R (62) dans le prolongement de ce renflement de R (61), qui s'éloigne de l'axe de soupape (va) et se retire sous la surface conique (kf) sus-définie de la surface d'étanchéité de siège de soupape (30), avec un minimum (Min) éloigné de l'axe de soupape, à partir duquel la barre (63) du « R » s'étend obliquement de nouveau en direction de la surface d'étanchéité du siège de soupape (30) ou de la surface conique (kf) la définissant, ledit renflement (61), l'échancrure (62) et la barre du R (63) se prolongeant les uns dans les autres « à la manière de méandres ».

2. Soupape ou soupape de remplissage selon la revendication 1, **caractérisée en ce que**, depuis le début (supérieur) ― en commençant directement par le bord supérieur (OR) de la gorge annulaire (31) en direction de la surface conique de siège de soupape (30, kf) - du renflement de l'arc de cercle du R (61), qui dépasse de la surface conique de siège de soupape (kf), via l'échancrure (62), qui se retire ensuite sous ladite surface conique (kf), jusqu' à l'extrémité du pied (inférieur) de la barre du R (63) ou jusqu'an bord inférieur de gorge (UR), le contour de la section transversale de la région interne (BI) du toroïde d'étanchéité (6) présente, de manière continue et permanente, un tracé curviligne sans arête, coude, point de discontinuité ou similaires, avec sensiblement quatre zones de contour (I, II, III, IV) se prolongeant les unes les autres ― à la manière de tracés curvilignes et de droites reliées tangentiellement à ceux-ci, étant précisé que
- la zone (I) s'étend sous la forme d'une droite de naissance d'arc de cercle du R qui forme la naissance de l'arc de cercle du R (611) et s'élève directement depuis le bord de gorge supérieur (OR) au-delà de la surface conique de siège de soupape (kf), selon un angle d'inclinaison (βa) par rapport à un plan (Es) normal à l'axe de soupape (va) qui est supérieur à l'angle d'inclinaison (α) de la génératrice de la surface conique de siège de soupape (kf) par rapport audit plan (Es),
- la zone (II) est formée par un arc de cercle de renflement de R formant le renflement de l'arc de cercle de R (63), qui se raccorde tangentiellement à la zone (I) et revient en arrière au-delà d'un maximum (Max) proche de l'axe de soupape (va) jusqu'à environ la surface conique de siège de soupape (kf), et
- la zone (III) est formée par un arc de cercle d'échancrure de R formant l'échancrure de R (62), qui prolonge la zone (II) de manière continue et constante ― sensiblement à la manière d'un « S » -, et s'étend au-delà d'un minimum (Min) distant de l'axe de soupape (va), et enfin
- la zone (IV) se présente sous la forme d'une droite oblique de barre de R formant la barre de R (63), qui part tangentiellement à l'arc de cercle d'échancrure de R de la zone III, selon un angle d'inclinaison (βb) par rapport au plan (Es) qui est également supérieur à l'angle d'inclinaison (α) de la génératrice de la surface conique de siège de soupape (kf), et s'éloigne de nouveau en direction de ladite surface conique de siège de soupape (kf) jusqu'au bord de gorge inférieur (UR).

3. Soupape selon la revendication 1 ou la revendication 2,
**caractérisée en ce que**
- le rayon (r61) de l'arc de cercle du renflement de R (61) correspondant à la zone II est supérieur au rayon (r62) de l'arc de cercle de l'échancrure de R (62) correspondant à la zone III, le rapport entre les rayons r61:r62 étant de préférence de (1,4 à 1,6):1, en particulier 1,5:1, et/ou
- l'angle d'inclinaison (βa) de la droite de naissance de l'arc de cercle du R (611) correspondant à la zone I par rapport au plan (Es) est égal ou, de préférence, supérieur à l'angle d'inclinaison (βb) de la droite de barre de R (63) correspondant à la zone IV par rapport au plan (Es), le rapport entre lesdits angles d'inclinaison (βa):(βb) (en degrés) étant de préférence de (1,15 à 1,05):1, en particulier 1,10:1, et/ou
- le rapport entre l'angle d'inclinaison (βa) de la droite de naissance de l'arc de cercle de R (611) correspondant à la zone I par rapport au plan (Es) et l'angle (α) de la génératrice de la surface conique de siège de soupape (kf) est supérieur ou égal à 1,2:1 et inférieur ou égal à 1,9:1, et de préférence égal à (1,55 à 1,8):1.

4. Soupape selon l'une quelconque des revendications 1 à 3, **caractérisée en ce que** le volume total du renflement de l'arc de cercle de R (61) du toroïde d'étanchéité (6) qui dépasse de la surface conique (kf) définie par la surface d'étanchéité (30) du siège de soupape (300) - à l'état non chargé par la pression ― est sensiblement égal ou supérieur au volume total de l'espace libre (fr) qui se retire sous la surface conique de siège de soupape (kf) sus-définie, et est délimité par les zones de contour (III) et (IV) et la surface conique de siège de soupape (kf).

5. Soupape selon l'une quelconque des revendications 1 à 4,
**caractérisée en ce que**
- la face périphérique (66) du toroïde d'étanchéité (6), formant sensiblement la face arrière de la lettre R et reliée de préférence par vulcanisation avec liaison intime au fond (36) de la gorgé annulaire (31) du siège de soupape (30), qui affecte une forme concave complémentaire ― notamment en arc de cercle ― est incurvée de manière convexe vers l'extérieur ― notamment selon un arc de cerclé et/ou
- la face d'appui du R ou la face de base (67) du toroïde d'étanchéité (6), dont la section transversale affecte une forme en R, et la paroi de gorge annulaire (37) correspondante sont conçues sous la forme de faces externes cylindriques parallèles à l'axe de soupape (va) et
- la face d'appui du R ou la face de base (67) du toroïde d'étanchéité (6) ― est reliée ― de préférence par vulcanisation avec liaison intime à la paroi (37) de la gorge annulaire (31), tout comme sa face périphérique convexe (66) au fond de gorge concave correspondant (36).

6. Soupape selon l'une quelconque des revendications 1 à 5,
**caractérisée en ce que**
- la face concave (36) du fond de la gorge annulaire (31) du siège de soupape (300), dont l'incurvation est complémentaire de celle de la face périphérique convexe (66) du toroïde (6), se termine directement au niveau de la surface d'étanchéité conique (30) du siège de soupape (300), ou **en ce que** la face arrière du R ou surface périphérique (66) convexe de la section transversale en R du toroïde d'étanchéité (6) se prolonge directement en la droite de naissance d'arc de cercle dé R (611) (zone I) au niveau de son intersection avec la surface conique de siège de soupape (kf) en formant un coude marginal supérieur (OR) ou similaire, et/ou
- la droite de naissance d'arc de cercle de R (611) (zone I), qui est prolongée par le renflement (61) de l'arc de cercle de R de la section transversale de toroïde annulaire (q6), et la droite de barre de R (631), qui sort de l'échancrure (62) (zone III) et correspond à la barre oblique de R (63), sont inclinées par rapport au plan (Es) selon des angles (βa, βb) - éventuellement égaux entre eux - supérieurs à 55°, notamment compris entre 70 et 85°.

7. Soupape selon l'une quelconque des revendications 1 à 6,
**caractérisée en ce que**
- les surfaces d'étanchéité (30, 10) du siège de soupape (300) et du cône de soupape (100), ou la face conique (kf) du siège de soupape (300) sont/est inclinée(s) d'un angle (α) de 40 à 50°, de préférence de 45° (±1,5°) par rapport à l'axe de soupape (va) et/ou
- les surfaces médianes (mn, md) de la gorge annulaire de siège de soupape (31) et du toroïde d'étanchéité (6) fixé par vulcanisation sur celle-ci coïncident avec une surface médiane (mv) du cône de soupape (11) dans sa position lorsque la soupape (1) est fermée, ladite surface médiane (mv) étant parallèle à l'axe de soupape (va) et située à mi-hauteur (hr/2) d'un cône tronqué défini par la face d'étanchéité (30) du siège de soupape (300), et/ou
- chacune des bandes de cône tronqué ou bandes de la face d'étanchéité (30) du siège de soupape (300), qui s'étendent de part et d'autre du toroïde d'étanchéité (6) ou de la gorge annulaire (31) le recevant, présente une largeur de génératrice (eb) identique, inférieure à la largeur de génératrice (ed) du toroïde d'étanchéité (6).

8. Soupape selon l'une quelconque des revendications 1 à 7, **caractérisée en ce que** les rapports des rayons de courbure (r66, r61, r62) de la face périphérique (66) ou convexe annulaire, qui délimite la section transversale du toroïde d'étanchéité (6) affectant une forme en R, et des zones de contour en arc de cercle (II, III) sont les suivants :
| | | | |
|---|---|---|---|
| rayon (r66) de la face annulaire convexe (66), zone II | 4,5 à 5,5 | notamment | 5 |
| sur | sur | | sur |
| rayon (r61) du renflement de l'arc de cercle de R (61), zone II | 1,4 à 1,6, | notamment | 1,5 |
| sur | sur | | sur |
| rayon (r62) du renflement (62), zone III | | | |
| entre l'arc de cercle de R (61), zone II et la barre de R (63), zone IV : | 1 | | 1 |

9. Soupape selon l'une quelconque des revendications 1 à 8, **caractérisée en ce que** si l'on prend le centre (Mk) du cercle de courbure de la face périphérique convexe (66) du toroïde d'étanchéité (6) comme point origine (x =0, y = 0), les rapports entre les coordonnées x et y sont les suivants, les dimensions étant les mêmes que dans les indications de rapports dimensionnels aux revendications 3 et 8 :
| | Coordonnées | | Ecart éventuel |
|---|---|---|---|
| | x | y | |
| Centre (Ma) de la courbure de renflement de l'arc de cercle de R, | | | |
| zone II : | 0 | +2 | (±0,2) |
| sur | sur | | |
| Centre (Me) de la courbure d'échancrure de R, zone III | | | |
| entre l'arc de cercle de R, zone II et la barre de R, zone IV | 0 | -1 | (±0,1) |

10. Soupape selon l'une quelconque des revendications 1 à 9,
**caractérisée en ce que**
- lorsque la soupape (100) est fermée et soumise à la pression du frigorigène, notamment le CO₂, le renflement de R (61), (zone II), de la région interne (BI) du toroïde d'étanchéité ou son volume réduit sous l'effet de la (haute) pression, peut être déplacé ou refoulé, avec déformation par pressage, par la surface d'étanchéité (10) du cône de soupape (100) sensiblement en direction de la barre oblique de R (63), (zone IV), jusqu'à ou dans l'espace libre (fr) défini par l'échancrure de R (62), (zone III), la barre de R (63) et la face conique (kf) et/ou
- lorsque la soupape (100) est fermée sous l'effet de la (haute) pression, les surfaces d'étanchéité (30, 10) du siège de soupape (300) et de la tête de soupape (100) étant pressées l'une contre l'autre, le volume du renflement d'arc de cercle de R (61) du toroïde d'étanchéité (6), qui dépasse de la surface conique (kf) définie par la surface d'étanchéité (30) du siège de soupape (300), peut être refoulé dans l'espace libre (fr) formé par l'échancrure se retirant sous la face conique sus-définie (kf), étant précisé qu'il reste un espace libre résiduel (rr) dé préférence compris entre 3 et 7 % dudit espace libre (fr) à l'état non chargé par la pression.

11. Soupape selon l'une quelconque des revendications 1 à 10,
**caractérisée en ce que**
- le toroïde d'étanchéité (31) est fabriqué dans un matériau d'étanchéité élastomère à base de polymère fluoré, notamment du caoutchouc fluoré (« FPM » selon DIN, « FKM » selon ASTM), de préférence un produit commercialisé sous le nom SIMRIT®, notamment de type 85 FPM, présentant les caractéristiques suivantes :
| **Propriété** | | **Valeur :** | **Valeur préférée** |
|---|---|---|---|
| Densité, g/cm³ | (DIN 53479) | 1,8 à 19 | 1,85 |
| Dureté, Shore A | (DIN 53505) | 80 à 90 | 85 |
| Élasticité de rebondissement, % | (DIN 53512) | 7 à 15 | 10 |
| Contrainte de traction pour un allongement de 100 %, N/mm² | (DIN 53504) | 6,5 à 7,0 | 6,8 |
| Résistance à la traction, N/mm² | (DIN 53504) | 20 à 22 | 20,9 |
| Allongement à la rupture, % | (DIN 53504) | 235 à 255 | 244 |
| Ecart permanent % 22h/150°C | (DIN 52517) | 27 à 33 | 30 |
et/ou
- le corps de siège de soupape (3) ou au moins sa gorge annulaire (31) est formé(e) dans un métal apte à recevoir des élastomères par vulcanisation ou en un alliage métallique de ce type, de préférence en bronze, laiton ou aluminium, et/ou
- les surfaces d'étanchéité (30, 10) du siège de soupape (300) et de la tête de soupape (100) présentent une qualité d'usinage de surface - assurant au moins une étanchéité métallique grossière ― de préférence une rugosité maximale de R_{z}4.
